# EUROPEAN PATENT SPECIFICATION

(11) **EP 0 779 025 B1**
(45) Date of publication and mention of the grant of the patent: **13.06.2001**
(21) Application number: 97200598.7
(22) Date of filing: 05.03.1993
(51) Int. Cl.: A01J 5/017

(54) **A milking machine for automatically milking animals**
Melkmaschine zum automatischen Melken von Tieren
Machine à traire pour la traite automatique d'animaux

(30) Priority: 06.03.1992 NL 9200418
(43) Date of publication of application: 18.06.1997
(62) Divisional of application: 93200620.8
(73) Proprietor: C. van der Lely N.V., 3155 PD Maasland (NL)
(72) Inventor: van der Lely, Cornelis, 6300 ZUG (CH)
(74) Representative: Corten, Maurice Jean F.M.

(56) References cited:
- EP-A- 0 194 729
- EP-A- 0 258 938
- EP-A- 0 313 109
- EP-A- 0 349 019

## Description

The invention relates to a milking machine according to the preamble of claim 1.

Such a milking machine is known from EP-A-0 349 019. In this known milking machine the milking cluster and the detection device are rigidly attached to one and the same support. The milking cluster and the detection device are movable from a housing below the floor to a position above the floor, and vice versa.

It is an object of the invention to accommodate the detection device in such a way in the milking parlour that there is less chance that it will be damaged by the animal.

According to the invention this is achieved in that the detection device is accommodated in a housing such that it is retractable into the housing in a manner of a periscope, and in that the detection device is disposed such that it is movable in the longitudinal direction of the housing. In this way it is possible to store the sensor device in the housing after the position of the teats is determined, and the position of the front and the rear teats can be determined in a more accurate way. In accordance with a further feature of the invention the detection device is accommodated on a bottom plate which is movable in the longitudinal direction of the milking parlour over rails. According to a further feature of the invention the sensor device is movable in height relatively to the bottom plate by means of a parallelogram construction. The parallelogram construction is according to the invention operable by means of a cylinder.

In accordance with a further feature of the invention there is fitted on the bottom plate in a similar manner as the sensor device a milking cluster and/or a teat cleaning implement.

In accordance with still an other feature of the invention the sensor device is located in the midway point in front of the two leading teat cups of the milking cluster. In this way the position of all the teats can be determined accurately.

In accordance with still an other feature of the invention the duct is provided with an aperture over which a cover is movable in the longitudinal direction of the duct.

For a better understanding of the invention and to show how the same may be carried into effect, an embodiment of an implement for milking animals, such as cows, comprising a milking parlour will now be described by way of example with reference to the accompanying drawings, in which:
Figure 1 shows a milking parlour provided with an expelling implement, as well as a partly cut-away duct provided in the milking parlour;
Figure 2 is a cross-sectional view of the duct taken on the line II-II in Figure 1;
Figure 3 is a side view of the milking parlour, wherein the teat cups are connected to the teats of an animal present in the milking parlour;
Figure 4 is also a side view of the milking parlour, wherein the teats of the animal are post-treated by means of a disinfecting implement and
Figure 5 is a plan view of the milking parlour.

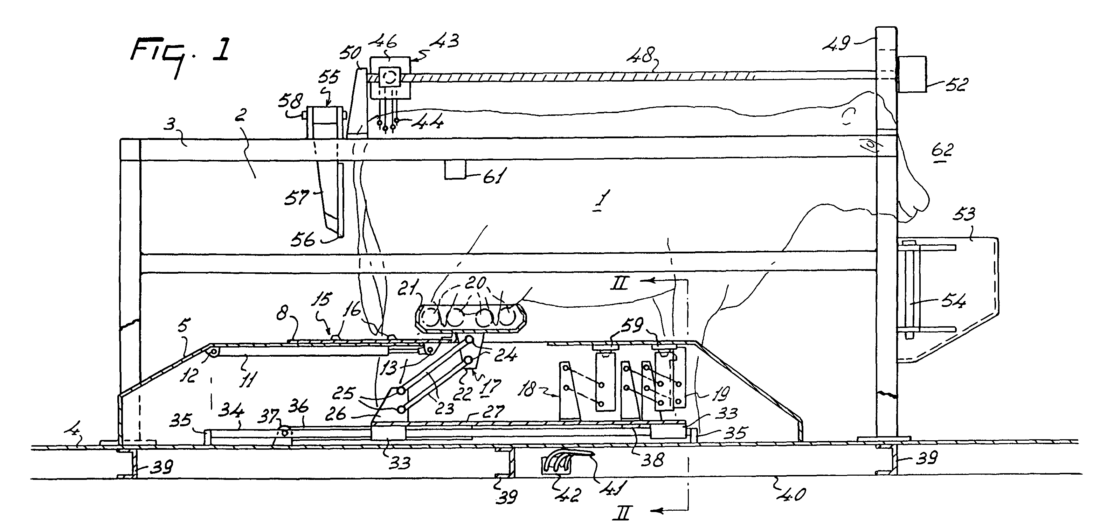

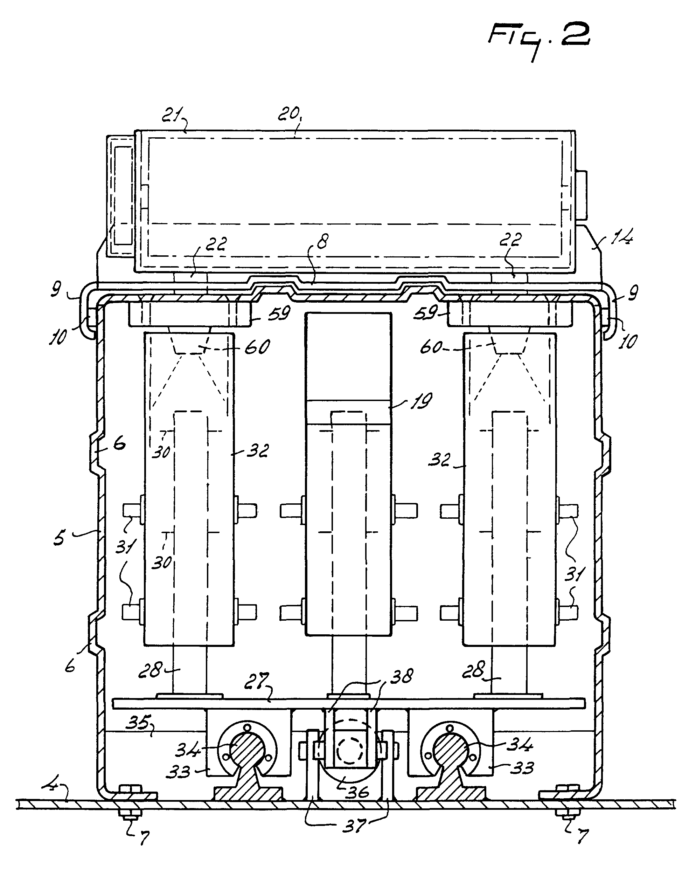

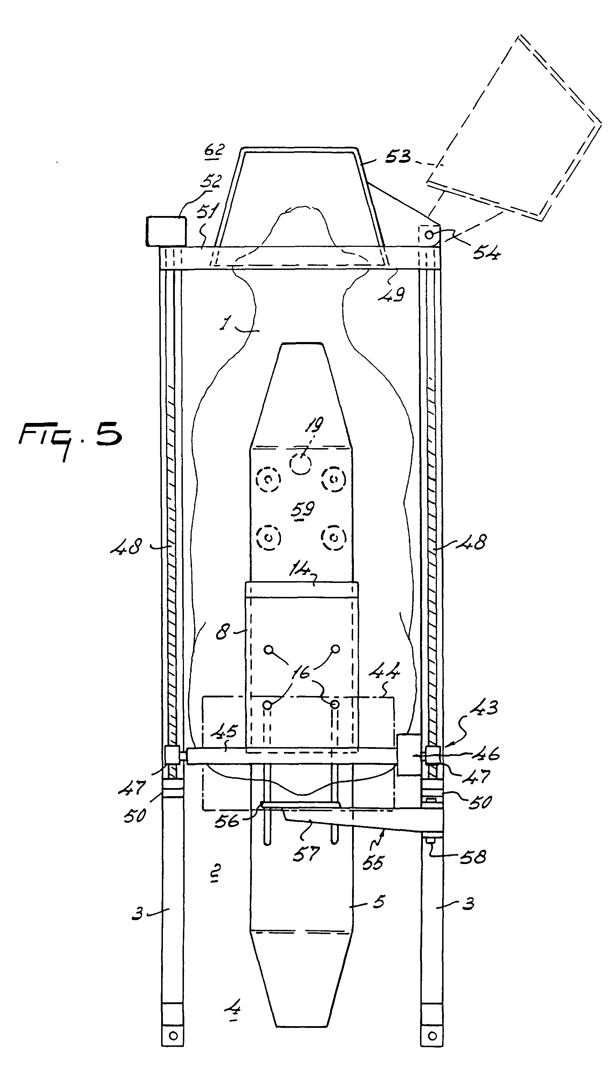

Figure 1 shows in a side elevational view a cow 1 in a milking parlour 2. The milking parlour 2 is surrounded by a railing 3 and has a floor 4. On the floor 4 there is a duct 5 which extends substantially through the overall length of the milking parlour 2. The ends of the duct 5 taper towards the floor 4. Figure 5 shows that the duct 5, taken in the longitudinal direction of the milking parlour 2, is located approximately in the centre plane of the milking parlour 2. In a plan view, the two ends of the duct 5 end in a blunt point. The duct 5 is preferably made of sheet iron provided with a stiffening profile 6 (Figure 2).

Figure 2 is a cross-sectional view of the duct 5, in which it is shown that the walls of the duct 5 are formed by a plate which is folded such as to form a U. The side walls of the duct 5 are provided at the bottom side with a folded-over edge, in which holes are drilled. The duct 5 is bolted to the floor by means of bolts 7 which are inserted through the holes in the folded-over edge. The height and the width of the duct 5 are substantially equal to each other, and amount to approximately 30 cms. It is, however, alternatively possible to choose different dimensions, for example when the duct 5 is used in a milking parlour for, for example, goats.

In the upper wall of the duct 5, near the midway point, there is provided a cover 8 which is movable in the longitudinal direction of the duct 5. The cover 8 extends through the overall width of the duct 5 and, as is shown in Figure 2, has folded-over side edges. The folded-over edge 9 of the cover 8 fits over a strip 10 fastened against the side wall of the duct 5. The strip 10 serves as a guide for the cover 8 which is slidable in the longitudinal direction of milking parlour 2. The strip 10 is preferably made of synthetic resin material. This has the advantage that the friction between the strip 10 and the folded-over metal edge 9 is reduced to a minimum, whilst it is less likely that the animal will hurt itself on the synthetic resin strip 10.

The cover 8 can be moved in the longitudinal direction of the duct 5 by means of a cylinder 11. At one end the cylinder 11 is connected by means of an eye 12 to the interior wall of the duct 5 and the other end is connected by means of an eye 13 to the cover 8. The cylinder 11 may, for example, be a pneumatically or hydraulically operable cylinder. To avoid the possibility that the cow 1 can hurt herself at the leading edge of the cover 8, the leading edge is provided with a rubber shock-absorbing strip 14. The strip 14 also serves as a sealing strip when the cover 8 covers the entrance to the duct 5.

In addition, the cover 8 is provided with a disinfecting implement 15, by means of which the udder and/or teats of the cow 1 can be disinfected. The disinfecting implement 15 comprises four spray heads 16 which are arranged in pairs and remote from each other near the edges of the cover 8. The spray heads 16 move in conjunction with the cover 8 when the operating cylinder 11 of the cover 8 is activated.

The duct 5 accommodates a teat cleaning implement 17, and also a milk cluster 18 and a laser 19. The teat cleaning implement 17 is formed by four profiled rollers 20 which are drivingly supported remote from each other in a container 21. The profiled rollers 20 are driven pairwise and in opposite directions by a motor 22 disposed at the side edge of the container 21. At its bottom side, the container 21 is provided with a support 22, to which two rods 23 are attached in a parallel relationship about horizontal pivot shafts 24. By means of their other ends, the parallel rods 23 are connected capably of pivoting about horizontal shafts 25 to a support 26 accommodated on the bottom plate 27. By means of the parallelogram formed by the rods 23, the teat cleaning implement 17 is movable in height relative to the bottom plate 27. The teat cleaning implement 17 can be moved by means of a cylinder, not shown. The milk cluster 18 is fitted to the bottom plate 27 in a similar manner as the teat cleaning implement 17. To that end, the bottom plate 27 is provided near the two side edges with two supports 28 which are located one after the other on the bottom plate 27. Two parallel and spaced-apart rods 29, which are pivotal about horizontal shafts 30, extend from each support 28. The rods 29 have their other ends connected pivotably about a horizontal shaft 31 to a teat cup 32. In a similar manner as the teat cleaning implement 17, the four teat cups 32 can be moved in height relative to the support 28. The laser 19 is connected to the bottom plate 27 in a similar manner as the teat cups 32. The laser 19 is located in the midway point in front of the two leading teat cups 32. The teat cups 32 are located in front of the teat cleaning implement 17 (taken in the direction from the exit of the milking parlour 2).

It will be obvious that the invention is not limited to the teat cleaning implement 17, milking cluster 18 and laser 19 described in the foregoing, but that it can also be used with other types of teat cleaning implements, milk clusters and detection devices for the determination of the position of the teats of an animal.

In order to provide that after cleaning of the teats by means of the teat cleaning implement 17 the teat cups 32 can be connected to the teats, the teat cups 32 must be moved to under the aperture provided in the duct 5. For that purpose two guide blocks 33 are fitted to the bottom edge of the bottom plate 27, one at each end and remote from each other. The guide blocks 33 bear on two rails 34 extending in the longitudinal direction of the milking parlour 2 on the floor 4. The two rails 34 are provided at their ends with shock absorber plates 35 which constitute the boundary for the guide blocks 33 which are slidable over the rails. The bottom plate 27 can be moved by means of a cylinder 36 in the longitudinal direction of the milking parlour 2 over the rails 34. For that purpose, the cylinder 36 has one end connected to the floor 4 by means of a connecting lug 37, whilst its other end is connected to the bottom plate 27 by means of a further connecting lug 38. The connecting lug 38 is disposed at the bottom side and near the leading edge of the bottom plate 27.

A cleaning implement 59, by means of which the teat cups 32 can be cleaned, are arranged near the leading side of the duct 5 against the upper wall. The cleaning implement 59 comprises four spaced-apart spray heads 60, along which cleaning solution can be sprayed in and/or along the teat cups 32.

The floor 4 is supported by U-beams 39 which are mounted transversely to the longitudinal direction of the milking parlour 2 under the floor 4. The U-beams 39 bear on the bottom 40 of the milking parlour 2. Lines 41, such as milk lines, vacuum lines, rinsing liquid lines etc., are located in the space between the floor 4 and the bottom 40. The lines 41 lead through an aperture, not shown in the drawing, in the floor 4 to the teat cleaning device 17, teat cups 18, cleaning implement 59 and disinfecting implement 15. At the edge of the milking parlour 2, the lines 41 end in a multiple panel 42 which is provided with quick-action couplings for supply lines.

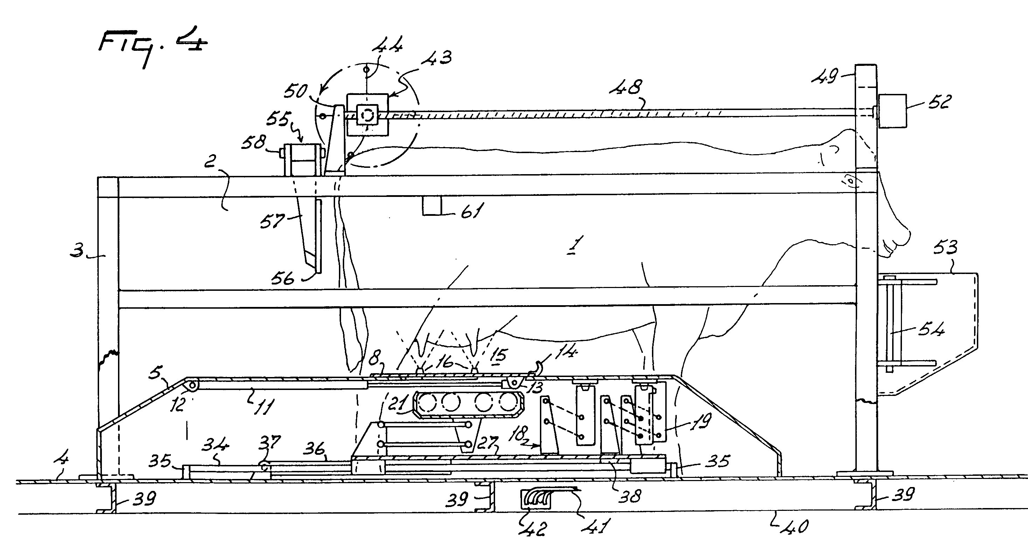

An expelling implement 43, by means of which the cow 1 can be removed from the milking parlour 2, is disposed near the upper side of the railing 3 transversely to the longitudinal direction of the milking parlour 2. As is shown in Figures 4 and 5, the cow expelling implement 43 is formed by whip members 44 which are rotatable about a horizontal shaft. The whip members 44 are fitted on a shaft 45, which shaft 45 is supported at both ends in bearings. The bearings are each accommodated in a housing 47. Near one of the housings 47, a motor 46 is disposed which can cause the horizontal shaft 45 to rotate. The whip members 44 can, for example, be made of leather thongs having at their ends a knot or flexible plastics material rods. The whip members 44 can be mounted such on the shaft 45 that they extend through the overall width of the milking parlour 2, but alternatively through a portion of the shaft 45. The housings 47 are movable along two stubs 48, these stubs being disposed one on each side edge of the railing 3. The stubs 48 have their ends rotatably supported in leading supports 49 and trailing supports 50. The leading supports 49 are disposed on the two leading ends of the railing 3. The trailing supports 50 are disposed at approximately 1/4 of the length of the milking parlour 2, taken in the direction from the rear side of the railing 3. At the front side of the milking parlour 2, a transmission 51 which interconnects the two stubs 48 is arranged between the stubs 48. Each of the leading supports 49 is provided with a motor 52 which can induce the stubs 48 to rotate. As the housings 47 are internally provided with thread, which engages the threaded ends 48, the housings 47 will be moved during rotation of the threaded ends 48 in the longitudinal direction of the milking parlour 2. The trailing supports 50 and the leading supports 49 constitute a stop for the housings 47, which are movable in the longitudinal direction of the milking parlour 2. The railing 3 is furthermore provided with a telemeter 61, by means of which it can be determined whether the cow 1 has left the milking parlour 2. By means of the telemeter 61 it is also possible to measure the distance to the cow 1, which data can be used to control the expelling device 43 (the shaft 45 carrying the whip members 44 can, if necessary, be brought up to the cow 1, if, for example, the cow stops halfway on leaving the milking parlour 2). The telemeter 61 may, for example, be an ultrasonic sensor, a light cell or a laser.

In addition, the leading side of the milking parlour 2 is provided with an exit door 62, to which a feed trough 53 is rigidly connected. The exit door 62 is pivotal about a vertical pivot shaft 54 located near the corner pole of the railing 3.

Disposed near the trailing support 50 is a retaining member 55, by means of which the cow 1 can be enclosed between the exit door 62 and the retaining member 45. The retaining member 55 comprises a plate 56 located in a vertical plane transversely to the longitudinal direction of the milking parlour 2 behind the cow 1 and in the centre of the milking parlour 2. The plate 56 measures approximately 50 by 50 cms. An arm 57, which extends obliquely upwardly to above the railing 3, is disposed at the rear side of the plate 56. The end of the arm 57 is pivotal about a horizontal shaft 58 extending in the longitudinal direction of the milking parlour 2. The horizontal shaft 58 is clamped between two strips which are fastened in the vertical direction on the railing 3. The plate 56 can be swung away in the vertical direction of the milking parlour 2 about the horizontal shaft 58 by means of a cylinder, not shown in the drawing.

The implement is further provided with a computer, not shown, by which the cylinders, motors, sensors, and automatic feeder of the implement can be controlled.

The above-described implement operates as follows:

Before the cow 1 enters the milking parlour, the retaining member 55 is hinged upwards, allowing free access to the milking parlour 2. The aperture in the duct 5 is closed by means of the cover 8. The cow 1 enters the milking parlour 2 and walks to as far as the exit door 62, where the cow 1 is fed via the feed trough 53. Thereafter the plate 56 is swivelled to behind the cow 1. As a result thereof, the cow 1 is bounded at its front side by the exit door 62 and at its rear side by the retaining member 55, while the railing 3 bounds the cow 1 on both sides. At the bottom side, the duct 5 forces the legs of the cow 1 to a certain spread position.

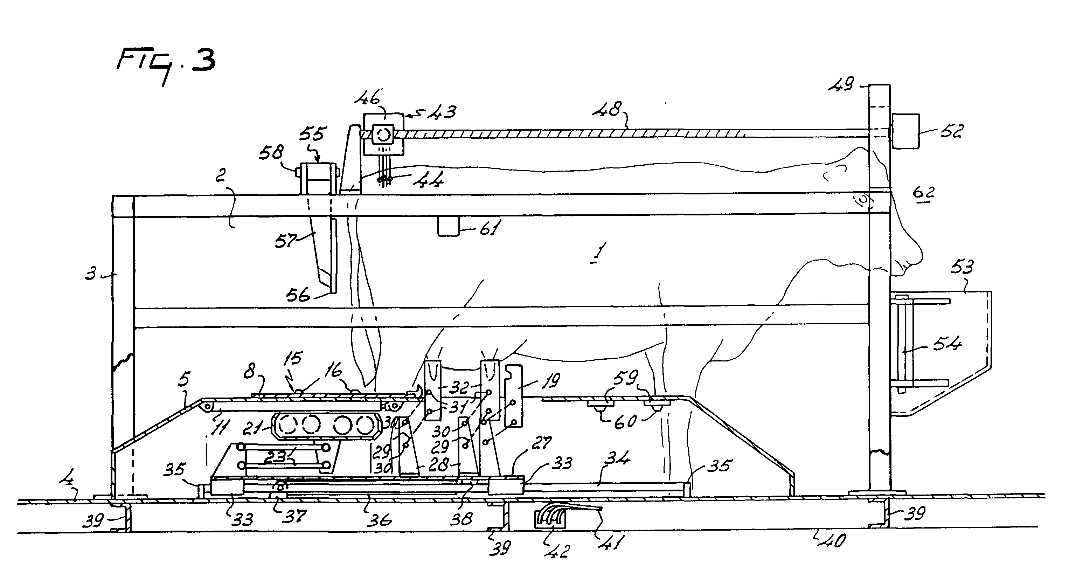

After the cow 1 has been supplied with fodder, the cover 8 is slid to the rear by energizing the cylinder 11, so that the aperture in the duct 5 is opened. Thereafter, as is shown in Figure 1, the teat cleaner 17 is moved to the teats of the cow 1 and the teats are cleaned by the profiled rollers 20. After the teats have been adequately cleaned, the teat cleaner 17 is retracted in the duct 5. Thereafter the cylinder 36 is energized and the bottom plate 27 is pulled to the rear over the rails 34. This causes the milk cluster 18 and also the laser 19 to be moved under the aperture in the duct 5. The laser 19 is raised through the aperture in the duct 5 and thereafter the position of the teats is determined by the laser 19. As soon as the teats have been located, the teat cups 32 are moved to the teats and connected thereto (Figure 3). After the milking operation has ended, the teat cups 32 are withdrawn into the duct 5 and the cover 8 is moved forwards by activation of cylinder 11, so that the aperture in the duct 5 is closed. By energizing the cylinder 36, the teat cups 32 are moved forwards to under the teat cup cleaner. Thereafter the teat cups 32 are connected to the spray heads 60 of the cleaning implement 59 and are rinsed thereby until they are clean.

After the milking has ended, the teats of the cow 1 are sprayed with an disinfectant by the disinfecting implement 15 mounted on the cover 8. Thereafter the exit door 62 is pivoted away by a cylinder, not shown, about the vertical shaft 54, so that the exit of the milking parlour 2 is opened. So the cow 1 can voluntarily leave the milking parlour 2. By means of the telemeter it is checked whether the cow 1 indeed leaves the milking parlour 2. Should this not be the case, then the expelling implement 43 is activated. The motor 46 then drives the horizontal shaft 45, so that the whip members 44 start hitting the cow 1 on her back. By means of the telemeter 61 it is checked whether the cow 1 leaves the milking parlour 2 completely. Should it be that the cow 1 stops, for example halfway, this is reported by the telemeter 61 and the motor 52 is started, whereafter the expelling implement 43 is moved up to the cow 1 until the whip members 44 hit the cow 1. This is continued until the cow 1 has left the milking parlour 2. After the cow 1 has left the milking parlour 2, the exit door 62 closes the exit and the expelling implement 43 is returned to the rearmost supports 50 and the plate 56 is pivoted upwardly. The milking parlour 2 is thereafter ready to receive a subsequent animal.

## Claims

1. A milking machine for automatically milking animals, such as cows, comprising a milking parlour (2) having a housing (5) and including a detection device (19), such as a laser, for determining the position of the teats and/or udder of the animal (1), said detection device (19) being movable from a position within the housing (5) to a position outside the housing (5), and vice versa, characterized in that the detection device (19) is accommodated in a housing (5) such that it is retractable into the housing (5) in a manner of a periscope, and in that the detection device (19) is disposed such that it is movable in the longitudinal direction of the housing (5).

2. A milking machine as claimed in claim 1, characterized in that the detection device (19) is accommodated on a bottom plate (27) which is movable in the longitudinal direction of the housing (5) over rails (34) .

3. A milking machine as claimed in claim 2, characterized in that the sensor device (19) is connected to a parallelogram construction by means of which the sensor device (19) is movable in height relative to the bottom plate (27).

4. A milking machine as claimed in claim 3, characterized in that the parallelogram construction is operated by means of a cylinder.

5. A milking machine as claimed in any one of the claims 2 - 4, characterized in that on the bottom plate (27) there is fitted a milking cluster (18) in a similar manner as the sensor device (19).

6. A milking machine as claimed in any one of the claims 2 - 5, characterized in that on the bottom plate (27) there is fitted a teat cleaning implement (17) in a similar manner as the sensor device (19).

7. A milking machine as claimed in claim 1, characterized in that the sensor device (19) is located in the midway point in front of the two leading teat cups (32) of the milking cluster (18).

8. A milking machine as claimed in any one of the preceding claims, characterized in that the housing in which the detection device (19) is accommodated is constituted by a duct (2).

9. A milking machine as claimed in claim 8, characterized in that the duct (5) is provided with an aperture over which a cover (8) is movable in the longitudinal direction of the duct (5).

10. A milking machine according to claim 5, characterized in that said detection device (19) and the milking cluster (18) are disposed such that the detection device (19) is movable to a position outside the housing (5) first to determine the position of the teats, after which the teat cups (32) of the milking cluster (18) are moved to the teats of the animal.

11. A milking machine according to any one of the preceding claims, characterized in that said housing is constituted by a duct (5) situated on the floor (4) of the milking parlour (2).

## Patentansprüche

1. Melkmaschine zum automatischen Melken von Tieren, wie z. B. Kühen, mit einem Melkstand (2), der ein Gehäuse (5) und eine Ermittlungsvorrichtung (19), wie z. B. einen Laser, zum Ermitteln der Position der Zitzen und/oder des Euters des Tieres (1) aufweist, wobei die Ermittlungsvorrichtung (19) aus einer Position innerhalb des Gehäuses (5) in eine Position außerhalb des Gehäuses (5) und zurück bewegbar ist,
dadurch gekennzeichnet, daß die Ermittlungsvorrichtung (19) in einem Gehäuse (5) derart angeordnet ist, daß sie nach Art eines Periskops in das Gehäuse (5) einfahrbar ist, und daß die Ermittlungsvorrichtung (19) derart angeordnet ist, daß sie in Längsrichtung des Gehäuses (5) bewegbar ist.

2. Melkmaschine nach Anspruch 1,
dadurch gekennzeichnet, daß die Ermittlungsvorrichtung (19) auf einer Bodenplatte (27) angeordnet ist, die in Längsrichtung des Gehäuses (5) auf Schienen (34) bewegbar ist.

3. Melkmaschine nach Anspruch 2,
dadurch gekennzeichnet, daß die Sensorvorrichtung (19) mit einer Parallelogrammführung verbunden ist, mittels der die Sensorvorrichtung (19) relativ zu der Bodenplatte (27) höhenbewegbar ist.

4. Melkmaschine nach Anspruch 3,
dadurch gekennzeichnet, daß die Parallelogrammführung mittels eines Zylinders betätigt wird.

5. Melkmaschine nach einem der Ansprüche 2 bis 4,
dadurch gekennzeichnet, daß an der Bodenplatte (27) ein Melkgeschirr (18) in ähnlicher Weise wie die Sensorvorrichtung (19) angebracht ist.

6. Melkmaschine nach einem der Ansprüche 2 bis 5,
dadurch gekennzeichnet, daß an der Bodenplatte (27) eine Zitzenreinigungsvorrichtung (17) in ähnlicher Weise wie die Sensorvorrichtung (19) angebracht ist.

7. Melkmaschine nach Anspruch 1,
dadurch gekennzeichnet, daß die Sensorvorrichtung (19) in der Mitte vor den beiden vorderen Zitzenbechern (32) des Melkgeschirrs (18) angeordnet ist.

8. Melkmaschine nach einem der vorhergehenden Ansprüche,
dadurch gekennzeichnet, daß das Gehäuse, in dem die Ermittlungsvorrichtung (19) untergebracht ist, durch einen Gerätetunnel (5) gebildet ist.

9. Melkmaschine nach Anspruch 8,
dadurch gekennzeichnet, daß der Gerätetunnel (5) mit einer Öffnung versehen ist, über der ein Deckel (8) in Längsrichtung des Gerätetunnels (5) bewegbar ist.

10. Melkmaschine nach Anspruch 5,
dadurch gekennzeichnet, daß die Ermittlungsvorrichtung (19) und das Melkgeschirr (18) derart angeordnet sind, daß die Ermittlungsvorrichtung (19) in eine Position außerhalb des Gehäuses (5) bewegbar ist, um zuerst die Position der Zitzen zu ermitteln, wonach die Zitzenbecher (32) des Melkgeschirrs (18) zu den Zitzen des Tieres bewegt werden.

11. Melkmaschine nach einem der vorhergehenden Ansprüche,
dadurch gekennzeichnet, daß das Gehäuse durch einen Gerätetunnel (5) gebildet ist, der auf dem Boden (4) des Melkstandes (2) angeordnet ist.

## Revendications

1. Machine de traite pour la traite automatique d'animaux, tels que des vaches, comportant un box de traite (2) ayant un boîtier (5), et comportant un dispositif de détection (19), tel qu'un laser, pour déterminer la position des trayons et/ou du pis de l'animal (1), ledit dispositif de détection (19) étant mobile à partir d'une position située à l'intérieur du boîtier (5) vers une position située à l'extérieur du boîtier (5), et vice versa, caractérisée en ce que le dispositif de détection (19) est reçu dans le boîtier (5) de telle sorte qu'il peut être rétracté dans le boîtier (5) à la manière d'un périscope, et en ce que le dispositif de détection (19) est disposé de telle sorte qu'il est mobile dans la direction longitudinale du boîtier (5).

2. Machine de traite selon la revendication 1, caractérisée en ce que le dispositif de détection (19) est reçu sur une plaque de fond (27) qui est mobile dans la direction longitudinale du boîtier (5) sur des rails (34).

3. Machine de traite selon la revendication 2, caractérisée en ce que le dispositif de détection (19) est connecté à une réalisation en parallélogramme par l'intermédiaire de laquelle le dispositif de détection (19) est mobile en hauteur par rapport à la plaque de fond (27).

4. Machine de traite selon la revendication 3, caractérisée en ce que la réalisation en parallélogramme est actionnée par l'intermédiaire d'un vérin.

5. Machine de traite selon l'une quelconque des revendications 2 à 4, caractérisée en ce que sur la plaque de fond (27), est agencé un groupe de traite (18) d'une manière similaire au dispositif de détection (19).

6. Machine de traite selon l'une quelconque des revendications 2 à 5, caractérisée en ce que sur la plaque de fond (27), est agencée une installation de nettoyage de trayons (17) d'une manière similaire au dispositif de détection (19).

7. Machine de traite selon la revendication 1, caractérisée en ce que le dispositif de détection (19) est positionné au point médian en avant des deux gobelets trayeurs avant (32) du groupe de traite (18).

8. Machine de traite selon l'une quelconque des revendications précédentes, caractérisée en ce que le boîtier dans lequel le dispositif de détection (19) est reçu, est constitué d'un conduit (5).

9. Machine de traite selon la revendication 8, caractérisée en ce que le conduit (5) est muni d'une ouverture sur laquelle un couvercle (8) est mobile dans la direction longitudinale du conduit (5).

10. Machine de traite selon la revendication 5, caractérisée en ce que ledit dispositif de détection (19) et le groupe de traite (18) sont disposés de telle sorte que le dispositif de détection (19) est mobile vers une position située à l'extérieur du boîtier (5) d'abord pour déterminer la position des trayons, après quoi les gobelets trayeurs (32) du groupe de traite (18) sont déplacés jusqu'aux trayons de l'animal.

11. Machine de traite selon l'une quelconque des revendications précédentes, caractérisée en ce que ledit boîtier est constitué d'un conduit (5) situé sur le sol (4) du box de traite (2).
